# EUROPEAN PATENT SPECIFICATION

(11) **EP 2 117 336 B1**
(45) Date of publication and mention of the grant of the patent: **23.08.2017**
(21) Application number: 07870119.0
(22) Date of filing: 31.12.2007
(51) Int. Cl.: A23G 3/00, A23G 3/54

(54) **METHOD OF PREPARING A COATED CONFECTIONARY PRODUCT**
VERFAHREN ZUR HERSTELLUNG EINES BESCHICHTETEN KONFEKTPRODUKTS
PROCEDE DE PREPARATION DE PRODUIT DE CONFISERIE ENROBE

(30) Priority: 19.01.2007 US 881257 P
(43) Date of publication of application: 18.11.2009
(73) Proprietor: Wm. Wrigley Jr. Company, Chicago, IL 60642 (US)
(72) Inventor: BERNICKY, Marc, A., Chicago, IL 60642 (US); DOERR, Caryn, M., Chicago, IL 60642 (US); RUEDISUELI, James, W., Chicago, IL 60642 (US); WOWCHUK, Christina, N., Chicago, IL 60642 (US); GIFFORD, Wenying, Z., Chicago, IL 60642 (US)
(74) Representative: Campbell, Neil Boyd
(86) International application number: PCT/US2007/089189
(87) International publication number: WO 2008/091476

(56) References cited:
- EP-A- 1 151 672
- WO-A-02/056698
- WO-A-2005/065461
- WO-A-2006/083784
- GB-A- 2 114 418
- US-A- 3 676 036
- US-A- 4 450 179
- US-A- 5 035 905
- US-B1- 6 372 271

## Description

### FIELD OF THE INVENTION

This invention relates to methods of preparing a food product, and in particular to methods of preparing a coated confectionary product. Confectionary products obtainable by such methods we also provided.

### BACKGROUND

Numerous coated confectionaries are available. Many confectionaries, such as M&M's or chewing gum balls, have a hard shell sugar coating. Some products, such as M&M's CRISPIES, have a hard center, with a chocolate covering followed by a hard shell coating. Other products include a chewy center with a hard candy shell. Thus confectionary products with multiple layers and coatings are known.

However, producing a product with a chewy center and a hard shell can cause processing difficulties, especially with controlling the crystallinity and moisture levels in the product. It is difficult to coat a soft center with a hard coating. Also, hard shells can be brittle and difficult to package without damaging the product or causing the hard shell to chip off or break.

WO 2006/083784 describes a method of producing a confectionery product with a centre and coating by means of a coextrusion process.

WO 02/056698 describes the formation of a three phase confectionery product having a liquid or semi-liquid core by means of coextrusion.

EP 1151672 describes the production of a confectionery product having a crystalline anhydrous filling enclosed within a casing.

US 4,450,179 describes a two component candy made by coextrusion.

US 3,676,036 and US 5,035,905 describe apparatus for making candy.

US 6,372,271 describes a chewy sweet with a caramel centre and a coating.

WO 2005/065461 describes a multiple layer candy with a chewy centre.

GB 2114418 describes a method for forming a caramel mass string with a core of viscous filling mass.

### BRIEF SUMMARY

The method of producing a confectionary product according to the invention includes providing a first chewy candy material and mixing the first candy material in an extrusion mixing device. The first candy material is cooled after exiting the extrusion mixing device. The first candy material is metered through an extruder. A second candy material is disposed around the first candy material in a batch roller to form a jacketed confectionary material. The jacketed confectionary material is formed into a confectionary product.

In another aspect, the invention relates to a confectionery product obtainable by the method of the invention, comprising
a) a first chewy candy center comprising a sweetener, water and flavour;
b) an intermediate layer comprising sweetener and flavour which is at least partially crystalline;
c) a crunchy hard shell comprising a sweetener and flavour.

The foregoing and other features and advantages of the present invention will become apparent from the following detailed description of the presently preferred embodiments, when read in conjunction with the accompanying examples.

### BRIEF DESCRIPTION OF THE DRAWINGS

Fig. 1 shows an embodiment of a pack of confectionary products.
Fig. 2 shows one embodiment of a confectionary product.
Fig. 3 shows a cross section along 3-3 of the confectionary product of Fig. 2.
Fig. 4 shows one embodiment of a process for producing the confectionary product of Fig. 2.

### DETAILED DESCRIPTION OF THE DRAWINGS AND PREFERRED EMBODIMENTS

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

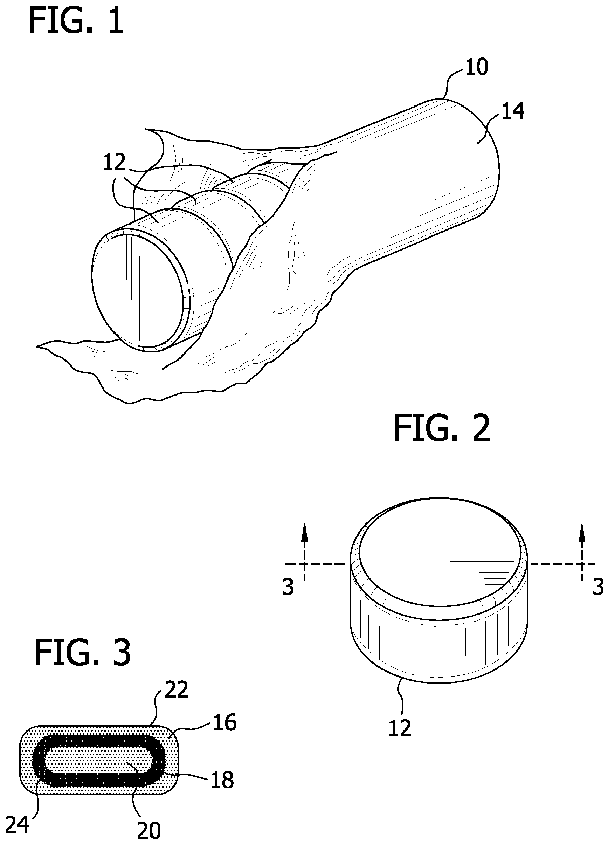

One embodiment of a pack 10 of confectionary products 12 is shown in Fig. 1. While products of the present invention may be made in a wide variety of shapes, one embodiment of the confectionary product 12 is shown in Fig. 2. The confectionary product 12 has a cylindrical shape and is about 16-22 mm in diameter and about 8-12 mm high, However, other shapes and dimensions of the confectionary product are possible.

As best seen in Fig. 3, the confectionary product has a center 20, an intermediate layer 24, and an outer layer 22. The center 20 is chewy and includes a sweetener, water, and flavor. The intermediate layer 24 includes a sweetener and flavor, and is at least partially crystalline. In one embodiment, the intermediate layer 24 includes a crystalline portion 18 and an amorphous portion 16. The outer layer 22 may be a crunchy hard shell and includes a sweetener and flavor.

The chewy center 20 may be crystallized, partially crystallized, uncrystallized, long chew, short chew, or grained. In one embodiment, the chewy center includes a texturizer. The texturizer is added to control the consistency and texture of the chewy center. The texturizer may be a fiber material, such as a dextrin. Other texturizers, such as proteins (such as albumin and gelatin), polyols (such as hydrogenated starch hydrolysates), hydrocolloids, gums, and similar materials, may also be used. The texturizer may be a branched maltodextrin such as Nutriose®. The expression "branched maltodextrin" includes maltodextrins as described in European patent publication EP 1 006 128. These branched maltodextrins exhibit an indigestibility character which has the consequence of reducing their calorific value.

The confectionary product may include sugar or sugarless materials. As a general matter, sweeteners used in the confectionary product may include, but are not limited to, sugars, corn syrups, polyols, hydrogenated starch hydrolysate syrup and combinations thereof. In one embodiment, the sweetener in the chewy center, the intermediate layer, and the outer layer includes sucrose and corn syrup. Different sweeteners may be used in the different layers of the confectionary product.

A conventional hard candy formulation may be used for the intermediate layer 24 and the outer layer 22. In one embodiment, the hard candy is made with sucrose and corn syrup blends. A blend of about 65/35 is a typical sucrose/syrup blend made for hard candy. Other sugars such as dextrose or lactose, along with corn syrups, may also be used for making a hard candy. The intermediate layer 24 may be glass or amorphous. The outer layer 22 may be a shell coating and may be hard panned, soft panned, or sugar shelled.

For a sugarless product, polyols are generally used, such as hydrogenated isomaltulose (which is also called isomalt), xylitol, maltitol and hydrogenated starch hydrolysates (HSH). In addition, isomalt/xylitol blends, isomalt/maltitol blends, isomalt/hydrogenated starch hydrolysate blends or maltitol/HSH blends may be used. Thus, in one embodiment, the sweetener is a non-sugar sweetener such as a polyol (such as isomalt) and a maltitol syrup (such as Lycasin®).

In one embodiment, the chewy candy center also includes acacia gum and a fat such as HPKO (hydrogenated palm kernel oil). Other possible fats include, but are not limited to, vegetable oil, partially hydrogenated vegetable oil, palm oil, butter, and lard. In one embodiment, the chewy center also includes lecithin, glyceride, and/or other emulsifiers. The chewy center also includes flavor. The flavor may be any suitable flavor, such as menthol. In one embodiment, the chewy center does not include starch. In another embodiment, the chewy center does not include gelatin.

The flavors used in the various layers of the confectionary product may include cooling agents such as menthol as well as essential oils, synthetic flavors, or mixtures including but not limited to oils derived from plants and fruits such as citrus oils, fruit essences, peppermint oil, spearmint oil, clove oil, oil of wintergreen, anise and the like. Artificial flavoring components are also contemplated for use in the confectionary product. Those skilled in the art will recognize that natural and artificial flavoring agents may be combined in any sensorially acceptable blend. All such flavors and flavor blends are contemplated by the present invention.

Colors and other additives are also contemplated for use in the confectionary product. Colors commonly used are FD&C lakes and dyes and some natural colors. Preferably, FD&C dyes are used. Other natural colors include colors such as chlorophyll, curcumin, caramel, carmine, annatto, and other similar types of colors. While the chewy center, intermediate layer, and outer layer may comprise a color, one, two, or all three layers can be uncolored, and if a color is used, it may be the same or different in each of the three layers.

In one embodiment, a method of producing the confectionary product includes providing a first chewy candy material and a second candy material. While not intending to be bound by any particular theory, the relative chewiness and crunchiness of the layers of the confectionary product are determined in part by the crystallinity and moisture content of the respective layers. The second candy material includes a sweetener. The sweetener is at least in part amorphous. The water activity of the chewy material may be greater than the water activity of the candy material in this stage of the process. Water activity is the relative availability of water in a substance. Water activity is defined as the vapor pressure of water in a material divided by the vapor pressure of pure water at a given temperature. Water tends to migrate from a material with a high water activity to a material with a lower water activity.

Nucleating sites may be created in the candy material to promote crystallization. Nucleating sites may also be created in the chewy center, which will then allow crystallization to begin at the interface between the chewy center and the candy material. Water is allowed to migrate from the chewy material to the candy material. The amorphous candy material is allowed to crystallize at least in part. Thus, the crystallinity of the candy material increases, making it less crunchy and more chewy.

In one embodiment, the step of creating nucleating sites in the candy material includes disposing a seeding agent adjacent the candy material. The seeding agent may be a crystalline material such as powdered sugar. In another embodiment, crystallinity is induced in the chewy material and the crystals in the chewy material adjacent the candy material act as nucleating sites. Nucleation sites may also be creating by shearing the candy material and/or the chewy material.

Another embodiment of a candy product includes two layers, a chewy center and a hard outer shell. The hard outer shell may be a glass candy material. The outer shell may be transparent or translucent. The candy product may include different flavors in the chewy center and the hard outer shell. Unlike the previously described embodiment, the water activities of the chewy center and the hard outer shell will generally be similar, because it is desired that the outer shell retain its crunchiness.

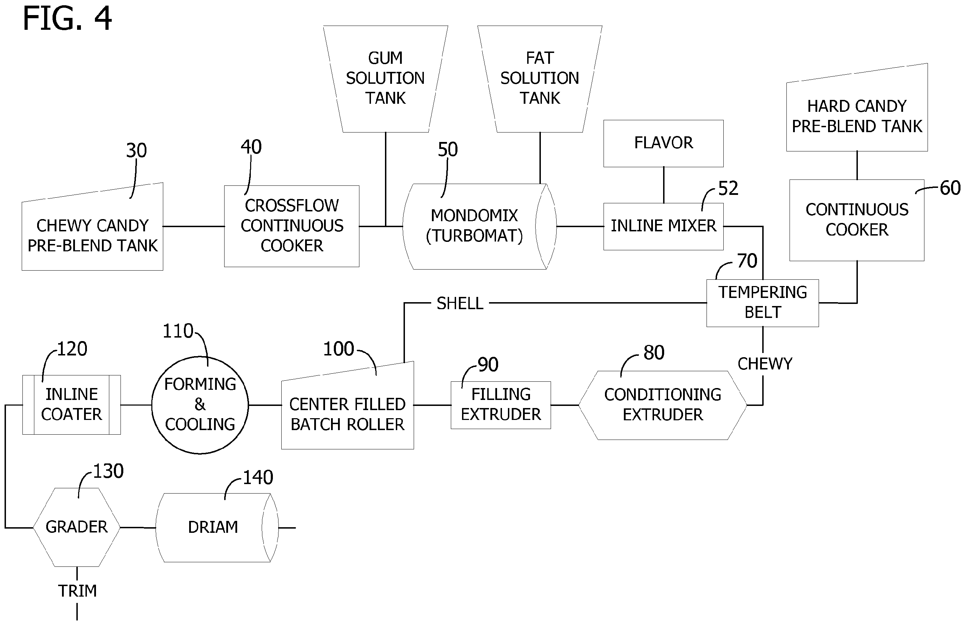

The confectionary product may be produced by any suitable method. One embodiment of a method of preparing the confectionary product is shown in Fig. 4. As a brief overview, a sweetener and a texturizer are provided in pre-blend tank 30. This mixture goes to cooker 40, and then to mixer and inline aerator 50 (such as a Turbomat), to provide a chewy material. Various other ingredients are also added to mixer 50. Ingredients for the candy material are provided to cooker 60. The chewy material and candy material are cooled on belt 70. The chewy material is placed in an extrusion mixing device 80, and then transferred to a pumping device 90. The chewy material and candy material are disposed together in a batch roller 100, and then formed into individual pieces at forming step 110. The pieces are pre-coated in an inline coater 120. The pieces may then be graded at grader 130. A final coating is then applied at Driam coater 140. A second grader 150 may also be used, followed by packaging 160.

There are several ways to control the crystallinity and grain size in the layers of the confectionary product. These control methods include adjusting the sweeteners in the chewy material, controlling the shear in the extruders, and the use of seed crystals. Specifically, increasing the amount of corn syrup relative to the amount of sugar in the chewy material will decrease crystallization. Increasing the amount of shear in the extruder will increase crystallization and increase the number of nucleation sites in the material. Seed crystals, such as powdered sugar, may be added at various stages in the process (such as in the Turbomat and in the extruder) to provide nucleation sites to promote crystallization.

One embodiment of the process for producing the confectionary product will now be discussed in more detail. A chewy material including a sweetener is provided. In one embodiment, the sweetener includes corn syrup and sucrose. In another embodiment, the sweetener is a non-sugar sweetener. The sweetener, water, and a texturizer are mixed in a pre-blend tank 30. In one embodiment, the texturizer includes a branched maltodextrin such as Nutriose®. The mixture is heated and pumped to a cooker 40. The slurry is cooked to the desired moisture level. In one embodiment, the desired moisture level in the slurry coming out of the cooker 40 is in the range of about 6% to about 8%, preferably in the range of about 7.2 % to about 7.8%.

The slurry is then added to a mixing device 50. In one embodiment, the mixing device 50 includes aeration. In one embodiment, the mixing device 50 is a Turbomat, which aerates and provides in-line mixing. Alternatively, the chewy material could be pulled (like taffy) to provide aeration. A variety of other materials may be added during of after this mixing step, such as binders, texturing agents, and seeding agents. In one embodiment, an acacia gum solution is added. In one embodiment, a fat, acid, powered sugar and lecithin mixture is metered in to the product stream directly after the aeration step. If a seeding agent is added, the chewy stream may begin to crystallize. In the Turbomat, the resulting slurry is mixed and aerated to form a chewy center stream. The process may include an additional inline mixer 52 after the Turbomat.

A candy material stream is formed from a sweetener and water to make a slurry of about 75% solids. In one embodiment, the sweetener is sucrose. In another embodiment, the sweetener is isomalt. The candy material stream may also include starch, water, colorings such as titania, and flavor. The candy material stream is heated and cooked in cooker 60 to reach a desired moisture level of approximately 4% (96% solids). The candy material includes an amorphous sweetener.

The chewy center stream and the candy material stream are then pumped to a cooling or tempering belt 70. Additional materials, such as flavors or acids, may be added to the chewy center and/or the candy material at this stage. In one embodiment, the chewy stream is cooled to about 40-45°C, and the candy material to about 75-80°C. The relative flow rates of the chewy material and the candy material are determined in part by the desired composition of the confectionary product. In one embodiment, the ratio of the flow of the chewy stream to the flow of the candy material is between about 3:7 and 7:3. In another embodiment, the ratio is between 3:7 and 5:5. At this stage, the candy stream is about 96% solids and the chewy center stream is about 92% solids. A nucleating agent such as powdered sugar may be added to the chewy stream. The powdered sugar or other additive may also help provide traction to the chewy material during subsequent processing.

The chewy stream is then introduced into a mixing device 80. The temperature of the chewy stream when entering the mixing device 80 is typically about 40-45°C. The mixing device 80 may be an extruder, such as a conditioning extruder. A suitable conditioning extruder is a Proform Extruder (such as Proform ME140, a co-rotating intermeshed twin screw extruder with no mixing elements and a 750 kg/hr maximum capacity). The conditioning extruder mixes the components of the chewy stream together, and in particular mixes the nucleating agent (which may be powdered sugar) throughout the chewy material. The mixing device 80 may operate at a low shear rate to avoid over-crystallizing the chewy material. After exiting the conditioning extruder, the chewy stream may then be introduced onto a tempering/relaxation belt to cool the stream. The residence time on the tempering belt may be about 4 minutes and preferably cools the chewy stream to under about 51°C.

The chewy stream is then introduced into a pumping or metering device 90 in order to provide a constant flow rate. The pumping device 90 may be an extruder, such as a filling extruder. The extruder may be a screw pump which does not provide mixing. A suitable extruder is a Bosch Rope X 1020, a counter-rotating twin screw extruder with a 800 kg/hr maximum capacity. Upon exiting the extruder, the chewy stream is fed to a batch rolling device in order to dispose the candy material around the chewy material.

The chewy material is coated with the candy material to form a jacketed material. The candy material may be what is known as a hard candy material. The chewy stream and the candy material stream are combined in a batch roller 100, with the candy material stream surrounding the chewy stream. The batch roller 100 may be a center filled batch roller. A suitable center-filled batch roller is a modified Bosch BAK 0165 BB, with a 1000 kg/h maximum capacity. The center-filled batch roller includes a fixed Teflon center tube around which the candy material is deposited. The chewy material flows through the plastic center tube and the candy material is deposited upon the chewy material at the end of the center tube. The angle of the batch roller, direction of the rotation, and product temperature are controlled to provide proper coating.

On entering the batch roller 100, the water activity of the chewy material may be about 0.40-0.60 and the water activity of the candy material may be about 0.15-0.35. After the jacketed material is formed, water migrates from the chewy material to the candy material. As the water migrates from the chewy material to the candy material, it promotes crystallization of the candy material.

The temperatures of the chewy material and the candy material are controlled to provide proper coating in the batch roller 100. The temperature of the hard candy material entering the batch roller may be between about 70°C and 80°C, and should be between about 72°C and 76°C. The temperature of the chewy material entering the batch roller should be between about 50°C and 55°C. If the candy material is too hot, it may slump in the batch roller 100. The candy material may also wrap around the cone rollers, causing sticking or jamming of the machine. Too hot candy material may also excessively heat the chewy candy portion, causing sticking in the forming dies and causing poor coating of the chewy material. If the hard candy material is too cold, it may have inadequate flow through the batch roller, may set within the machine (forcing machine stoppage), or may cause stretching and cracking during sizing, thus causing chewy candy to be exposed and stick to the sizing rollers during sizing.

Particulate material may be added at various stages of the process, such as before the mixing device 80, or on the tempering belt 70.

The candy stream (consisting of hard and chewy candy) is sent from the batch roller 100 through a rope sizer to reduce the diameter of the rope stream. The stream is then formed into individual candy pieces. In one embodiment, the individual candy pieces are about 2 g each. The resulting candy pieces are cooled in a cooling tunnel 110 and are loaded into a set of rotating cylindrical drums and pre-coated with a sweetener solution in a multi-step precoat addition 120 that consists of adding a pre-coat solution prior to additions of dry sugar and a mixture of dry sugar and dry gum arabic. In one embodiment, the sweetener solution includes sugar. The pre-coat solution may include gum arabic. In one embodiment, the pre-coat solution includes about 60% water, 12% gum arabic, and 28% powdered sugar. In another embodiment, the pre-coat solution includes 30-35% water, 22-27% sugar and gum Arabic solution, and 40-43% 42DE corn syrup. Alternatively, the precoating step may be skipped.

The individual pieces may then be graded at 130 and transferred to individual plastic storage containers and stored in a refrigerated room, preferably at about 18°C for about 12 hours. The pieces are then coated with a hard shell coating. The step of coating the pieces with a hard shell coating can occur before or after the candy material reaches crystallization equilibrium. In one embodiment, the pre-coated centers are coated in a Driam coater 140 with a sugar syrup to create a candy product. The use of a Driam coater to coat a confectionary product is described in U.S. Patent No. 6,444,240.

The process produces a confectionary product with three layers: a chewy center, an amorphous intermediate layer, and a hard candy outer shell. The amorphous sweetener in the intermediate layer is allowed to at least partially crystallize, which makes the intermediate layer chewier. Preferably, the candy material intermediate layer crystallizes over the course of 1-3 weeks, so that by the time the confectionary product reaches the consumer it has the desired texture. Thus, the process is able to coat the individual candy pieces while hard (as they come out of the batch roller), while during the normal distribution time a portion of the candy layer became soft. The candy pieces may be packaged before the hard candy outer shell becomes brittle.

### EXAMPLES

### Example 1

A confectionary product was prepared from the process depicted in Fig. 4. Corn syrup (74.5 kg/hr), granulated sucrose (74.5 kg/hr), water (as needed), and Nutriose (13.7 kg/hr) were mixed in a pre-blend tank. The mixture was heated and pumped to a cooker. The slurry was cooked to 128°C to the desired moisture level of 6-7%. The slurry was then added to the Turbomat. Also added to the Turbomat are: an acacia gum and water solution at a 1:1 acacia gum to water ratio and a fat mixture including about 72% hydrogenated fat, 25% powdered sugar, 1.7% glyceride and 1.7% lecithin. In the Turbomat, the resulting slurry was mixed and aerated to form a chewy center stream. The Turbomat operated at 8 bar. Individual feed pumps metered the appropriate amount of chewy candy cooked slurry (192 L/h), gum solution (12.5 L/h), and fat solution (40 L/h).

A hard candy material stream was formed from corn syrup and sugar to make a slurry. The candy material stream was stored in a water jacketed tank and cooked to 145°C.

The chewy center stream and the candy material stream were each pumped to a cooling belt. The chewy stream was cooled to about 40-45°C and the candy material was cooled to about 70°C-80°C on a tempering belt. The ratio of the flow of the chewy stream to the flow of the hard candy material was 3:2. Powdered sugar (0.12 kg/min) was added into the chewy stream. The chewy stream was mixed in a conditioning extruder and then deposited on a tempering/relaxation belt to cool the material. The cooled chewy stream, at a temperature of about 50-52°C, was then fed to a filling extruder to control the flow rate and act as a pump for the batch roller. The chewy stream and the candy material stream were combined in a center-filled batch roller, with the candy material stream surrounding the chewy stream. At the center-filled batch roller, the chewy stream was at about 55°C and the hard candy material was at about 72°C-76°C. The jacketed stream was sent through a rope sizer to reduce the diameter of the stream. The stream was then formed into individual candy pieces of about 2 g each.

The resulting candy pieces were loaded into a set of two rotating cylindrical drums and pre-coated with a sugar, water, and gum acacia solution at about 10% by weight of the candy pieces. They were then transferred to individual plastic storage containers and stored in a refrigerated room at 18°C for 12 hours. The pre-coated centers were then coated in a Driam coater with sugar solution to create a candy product of about 2.6 g.

### Example 2

A variety of confectionary products were made according to the general process as shown in Fig. 4. The composition of the chewy center material is shown in Table 1. The composition of the candy material is shown in Table 2. The jacketed material included 60% of the chewy center, and 40% of the hard candy material. The jacketed products were then coated with an outer sugar shell with the formulation shown in Table 3. The outer shell provided about 30% by weight of the final candy product.

The formulations in Example 2 produced confectionary products with acceptable properties.

**TABLE 1**

| | | Example 2 |
|---|---|---|
| Ingredient | Solids % | Weight % |
| Corn Syrup | 80% | 33% |
| Sugar | 100% | 33% |
| Water | 0% | 11% |
| Nutriose | 100% | 6% |
| | | |
| Water | 0% | 2% |
| Gum Arabic | 100% | 2% |
| | | |
| Hydrogenated Fat | 100% | 8% |
| Glyceride | 100% | 0.2% |
| Lecithin | 100% | 0.2% |
| Powdered Sugar | 100% | 5% |
| Flavor | 100% | 0.7% |

**TABLE 2**

| Ingredient | Solids % | Weight % |
|---|---|---|
| Sugar | 100% | 57% |
| Corn Syrup | 80% | 30% |
| Water | 0% | 12% |

**TABLE 3**

| Ingredient | Solids % | Weight % |
|---|---|---|
| Sugar | 100% | 66% |
| Water | 0% | 28% |
| Starch | 100% | 5% |
| Titanium Dioxide | 100% | 0.6% |

The amount of crystallinity was controlled to obtain the desired amount of chewy and hard material. The process had the benefit of being able to coat the individual candy pieces while hard (as they came out of the batch roller), while during the normal distribution time a portion of the candy layer became soft.

## Claims

1. A method of producing a confectionery product comprising
a) providing a first chewy candy material;
b) mixing the first candy material in an extrusion mixing device;
c) cooling the first candy material after exiting the extrusion mixing device;
d) metering the first candy material through an extruder;
e) providing a second candy material;
f) disposing the second candy material around the first candy material in a batch roller to form a jacketed confectionery material; and
g) forming the jacketed confectionery material into a confectionery product.

2. The method of claim 1 wherein the first candy material further comprises a sugar and a fat.

3. The method of claim 1 wherein the second candy material further comprises a sugar and a texturizer.

4. The method of claim 1 wherein the ratio of the first candy material to the second candy material is between 3:7 and 7:3.

5. The method of claim 1 wherein the ratio of the first candy material to the second candy material is between 3:7 and 5:5.

6. The method of claim 1 further comprising coating the jacketed confectionery material with a hard shell coating.

7. The method of claim 6 wherein the step of coating jacketed confectionery material with a hard shell coating occurs before the candy material reaches crystallization equilibrium.

8. The method of claim 1 wherein cooling the first candy material comprises disposing the first candy material on a tempering belt.

9. The method of claim 1 wherein the temperature of the first candy material is between 45°C and 65°C and the temperature of the second candy material is between 70°C and 85°C upon disposing the second candy material around the first candy material.

10. A confectionery product obtainable by the process of claim 6 comprising
a) a first chewy candy center comprising a sweetener, water and flavour;
b) an intermediate layer comprising sweetener and flavour which is at least partially crystalline;
c) a crunchy hard shell comprising a sweetener and flavour.

## Patentansprüche

1. Verfahren zum Herstellen eines Süßwarenproduktes, welches folgendes umfasst:
a) Bereitstellen eines ersten kaufähigen Weichkaramellenmaterials ("Candy");
b) Mischen des ersten Weichkaramellenmaterials in einer Extrusionsmischvorrichtung;
c) Kühlen des ersten Weichkaramellenmaterials nach Austritt aus der Extrusionsmischvorrichtung;
d) Dosieren des ersten Weichkaramellenmaterials durch einen Extruder;
e) Bereitstellen eines zweiten Weichkaramellenmaterials;
f) Platzieren des zweiten Weichkaramellenmaterials um das erste Weichkaramellenmaterial herum in einem Kegelroller, um ein kandiertes Süßwarenmaterial zu bilden; und
g) Bilden des kandierten Süßwarenmaterials zu einem Süßwarenprodukt.

2. Verfahren nach Anspruch 1, wobei das erste Weichkaramellenmaterial ferner einen Zucker und ein Fett enthält.

3. Verfahren nach Anspruch 1, wobei das zweite Weichkaramellenmaterial ferner einen Zucker und ein texturgebendes Mittel enthält.

4. Verfahren nach Anspruch 1, wobei das Verhältnis des ersten Weichkaramellenmaterials zu dem zweiten Weichkaramellenmaterial zwischen 3:7 und 7:3 liegt.

5. Verfahren nach Anspruch 1, wobei das Verhältnis des ersten Weichkaramellenmaterials zu dem zweiten Weichkaramellenmaterial zwischen 3:7 und 5:5 liegt.

6. Verfahren nach Anspruch 1, ferner das Beschichten des kandierten Süßwarenmaterials mit einer Hartglasurbeschichtung umfassend.

7. Verfahren nach Anspruch 6, wobei der Schritt des Beschichtens des kandierten Süßwarenmaterials mit einer Hartglasurbeschichtung eintritt, bevor das Weichkaramellenmaterial das Kristallisationsgleichgewicht erreicht.

8. Verfahren nach Anspruch 1, wobei das Kühlen des ersten Weichkaramellenmaterials das Platzieren des ersten Weichkaramellenmaterials auf einem Temperierband umfasst.

9. Verfahren nach Anspruch 1, wobei die Temperatur des ersten Weichkaramellenmaterials zwischen 45 °C und 65 °C liegt; und die Temperatur des zweiten Weichkaramellenmaterials zwischen 70 °C und 85 °C liegt, wenn das zweite Weichkaramellenmaterial um das erste Weichkaramellenmaterials herum platziert wird.

10. Süßwarenprodukt, welches nach dem Verfahren nach Anspruch 6 erreicht werden kann, und folgendes umfasst:
a) eine erste kaufähige Weichkaramellenmitte, welche ein Süßungsmittel, Wasser und Aroma enthält;
b) eine Mittelschicht, welche Süßungsmittel und Aroma enthält, und mindestens teilweise kristallin ist;
c) eine knusprige Hartglasur, welche ein Süßungsmittel und Aroma enthält.

## Revendications

1. Procédé de production d'un produit de confiserie comprenant :
a) la fourniture d'une première matière cristallisée tendre ;
b) le mélange de la première matière cristallisée dans un dispositif de mélange à extrusion ;
c) le refroidissement de la première matière cristallisée après sortie du dispositif de mélange à extrusion ;
d) la mesure de la première matière cristallisée à travers une extrudeuse ;
e) la fourniture d'une seconde matière cristallisée ;
f) la mise en place de la seconde matière cristallisée autour de la première matière cristallisée dans un rouleau discontinu pour former une matière de confiserie garnie ; et
g) la transformation de la matière de confiserie garnie en un produit de confiserie.

2. Procédé selon la revendication 1, dans lequel la première matière cristallisée comprend en outre un sucre et une graisse.

3. Procédé selon la revendication 1, dans lequel la seconde matière cristallisée comprend en outre un sucre et un agent de texturisation.

4. Procédé selon la revendication 1, dans lequel le rapport de la première matière cristallisée à la seconde matière cristallisée se situe entre 3:7 et 7:3.

5. Procédé selon la revendication 1, dans lequel le rapport de la première matière cristallisée à la seconde matière cristallisée se situe entre 3:7 et 5:5.

6. Procédé selon la revendication 1, comprenant en outre l'enrobage de la matière de confiserie garnie avec un enrobage à coque dure.

7. Procédé selon la revendication 6, dans lequel l'étape d'enrobage de la matière de confiserie garnie avec un enrobage à coque dure se fait avant que la matière cristallisée n'atteigne l'équilibre de cristallisation.

8. Procédé selon la revendication 1, dans lequel le refroidissement de la première matière cristallisée comprend la mise en place du premier matériau cristallisé sur une courroie de trempe.

9. Procédé selon la revendication 1, dans lequel la température de la première matière cristallisée se situe entre 45 °C et 65 °C et la température de la seconde matière cristallisée se situe entre 70 °C et 85 °C lors de la mise en place de la seconde matière cristallisée autour de la première matière cristallisée.

10. Produit de confiserie que l'on peut obtenir par le procédé selon la revendication 6, comprenant :
a) un premier centre cristallisé tendre comprenant un édulcorant, de l'eau et un arôme ;
b) une couche intermédiaire comprenant un édulcorant et un arome qui est au moins en partie cristalline ;
c) une coque dure croustillante comprenant un édulcorant et un arôme.
